(19) **Europäisches Patentamt**
**European Patent Office**
**Office européen des brevets**

(11) **EP 3 608 919 B1**

(12) **EUROPEAN PATENT SPECIFICATION**

(45) Date of publication and mention
of the grant of the patent:
**21.07.2021 Bulletin 2021/29**

(21) Application number: **18781209.4**

(22) Date of filing: **21.02.2018**

(51) Int Cl.:
***G21C 3/328*** *(2006.01)*

(86) International application number:
**PCT/JP2018/006161**

(87) International publication number:
**WO 2018/186039 (11.10.2018 Gazette 2018/41)**

(54) **FUEL ASSEMBLY AND METHOD FOR PRODUCING FUEL ASSEMBLY**

BRENNSTOFFANORDNUNG UND VERFAHREN ZUR HERSTELLUNG EINER
BRENNSTOFFANORDNUNG

ASSEMBLAGE COMBUSTIBLE ET PROCÉDÉ DE PRODUCTION D'UN ASSEMBLAGE
COMBUSTIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.04.2017 JP 2017075006**

(43) Date of publication of application:
**12.02.2020 Bulletin 2020/07**

(73) Proprietor: **Hitachi, Ltd.
Tokyo 100-8280 (JP)**

(72) Inventors:
 • **MITSUYASU, Takeshi
 Tokyo 100-8280 (JP)**
 • **AOYAMA, Motoo
 Tokyo 100-8280 (JP)**
 • **ONO, Michitaka
 Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(56) References cited:
**EP-A1- 2 280 400      JP-A- S5 570 788
JP-A- S6 232 385      JP-A- H05 164 867
JP-A- H10 268 076      JP-A- 2008 286 529
US-A- 4 018 697**

**Description**

Technical Field

The present invention relates to a fuel assembly for a boiling water reactor and a method for producing the same, and particularly to a technique using recovered uranium obtained by reprocessing spent fuel.

Background Art

By reprocessing spent uranium fuel removed from a reactor, the spent uranium fuel is separated into plutonium (Pu), uranium (U), other transuranium elements and fission products. A fuel assembly obtained by using plutonium as fuel and mixing and processing the same with depleted uranium is called MOX fuel. On the other hand, uranium obtained by reprocessing is called recovered uranium. Natural uranium mainly contains uranium 235 and uranium 238, while the recovered uranium contains uranium 236 additionally.

Uranium 236 acts as an absorber material because of having a capture cross section with respect to a thermal fission cross section larger than that of uranium 235. As a result, uranium fuel produced from the recovered uranium has a neutron multiplication factor lower than that of uranium fuel produced from the natural uranium under the same uranium 235 enrichment condition. Therefore, although use of the recovered uranium can save the natural uranium using amount, a higher uranium 235 enrichment is required to obtain the same burnup as that of the fuel produced from the natural uranium.

As a method of utilizing such recovered uranium, a method described in PTL 1 has been proposed. Since uranium 236 has a strong resonance absorption effect, an absolute value of a void coefficient is increased to a negative side. The increase in the absolute value of the void coefficient to the negative side means that a feedback effect is increased when a reactor core changes transiently, and in some cases, a margin for an operation limit value is reduced. Therefore, in PTL 1, uranium fuel concentrated from the natural uranium is disposed in a region having a large reaction rate of neutrons, such as a fuel assembly corner portion or a water rod neighbor position, and the recovered uranium is disposed in other regions, so that the increase in the absolute value of the void coefficient to the negative side caused by using the recovered uranium is minimized.

Further, in PTL 2, by using recovered uranium in fuel containing gadolinia which is a burnable poison, a reactivity loss caused by the recovered uranium can be reduced while maintaining the average uranium enrichment at the same level as in the related art, and a use ratio of the recovered uranium can be increased.

Thus, in the related knowledge, an arrangement method and the like have been studied such that a demerit on a reactor core characteristic of uranium 236 contained in the recovered uranium is minimized.

When attention is paid not only to a fuel assembly after fuel molding processing but also to a fuel production process, the fuel assembly is generally produced at a uranium enrichment of 5 weight percent (hereinafter, wt%) or less. Safety is ensured in a state of 5 wt% or less from the viewpoint of ensuring subcriticality in the fuel production process, and a facility needs to be changed in order to ensure the same safety in the fuel production in a case of exceeding 5 wt%.

Therefore, PTL 3 proposes a method in which erbia ($Er_2O_3$), which has a weak reactivity prevention effect and is a long-lasting burnable poison before all pellet molding processing, is mixed with uranium fuel pellets having a uranium 235 enrichment of 5 wt% or more, so that a maximum value of a neutron multiplication factor of the uranium fuel pellet is made smaller than that of fuel having a uranium 235 enrichment of 5 wt%, and the fuel having a uranium 235 enrichment of 5 wt% or more can be produced.

Prior Art Literature

Patent Literature

PTL 1: Japanese Patent No. 5986802
PTL 2: JP-A-11-174179
PTL 3: Japanese Patent No. 4077303
PTL 4: US 4 018 697 A
PTL 5: EP 2 280 400 A1

Summary of Invention

Technical Problem

In PTL 1 and PTL 2, in order to minimize an effect of the recovered uranium as much as possible, the natural uranium is required while loading the recovered uranium in a large amount into the fuel assembly.

In addition, in PTL 3, uranium 235 that is loaded and has reduced poison after irradiation in the reactor can be effectively utilized by using a burnable poison. However, a method of utilizing the recovered uranium after reprocessing is not illustrated.

PTL 4 shows selectively enriching a stream of recovered uranium composition derived substantially exclusively from depleted fuel, said stream being substantially free from uranium which has not been cycled through a nuclear reactor, to provide a rejected tails fraction and an upgraded fraction containing a concentration of uranium-235 greater than in said recovered uranium, such concentration being within a range from 1 percent to 3 percent of uranium-235, said upgraded fraction containing less than 70 percent but more than 40 percent of the total quantity of uranium-236 isotope in the recovered uranium, the U-236 concentration in a sample of the upgraded fraction always being greater than the U-236 concentration in the corresponding sample of the recovered uranium prior to said enrichment, said U-236 concentration in the sample of upgraded fraction being within a range from 0.05 percent to 2 percent

PTL 5 shows fuel rods constituting a fuel assembly, Gd compound oxide is added to low Gd containing fuel rods containing uranium dioxide of which enrichment exceeds 5 wt%. The Gd compound oxide is oxide of gadolinium and rare earth element "A" except for gadolinium and is expressed as a chemical formula A 1-x Gd x O 2-0.5x or a chemical formula A 1-x Gd x O 1.5 . As the rare earth element "A", cerium Ce, lanthanum La or erbium Er can be used.

Therefore, an object of the invention is to provide a fuel assembly and a method for producing the same that can ensure safety of the fuel production process and effectively utilize the recovered uranium after reprocessing while using fuel having a uranium enrichment exceeding 5 wt% for the purpose of a high burnup.

Solution to Problem

The above problem is solved by the subject matter of the appended claims. In particular, the invention provides a fuel assembly that includes a plurality of fuel rods containing uranium, in which at least one fuel rod among the plurality of fuel rods has a content of uranium 236 with respect to uranium 235 in a range defined by expression (1):

[Math. 1]

$$\frac{U236}{U235} \geq -0.006951e^3 + 0.223385e^2 - 1.591844e + 3.243469$$

and expression (2):

[Math. 2]

$$\frac{U236}{U235} \leq 0.3975e^2 - 3.4946e + 7.5355$$

where e is a uranium 235 enrichment.

The invention also includes: (a) a step of separating and recovering uranium containing uranium 235, uranium 236, and uranium 238 from spent fuel; and (b) a step of re-concentrating the recovered uranium recovered in step (a), in which in step (b), uranium 238 is removed such that the content of uranium 236 with respect to uranium 235 is in a range defined by expression (1):

[Math. 3]

$$\frac{U236}{U235} \geq -0.006951e^3 + 0.223385e^2 - 1.591844e + 3.243469$$

and expression (2):

[Math. 4]

$$\frac{U236}{U235} \leq 0.3975e^2 - 3.4946e + 7.5355$$

where e is a uranium 235 enrichment.

Advantageous Effect

According to the invention, it is possible to realize a fuel assembly and a method for producing the same that can ensure safety of the fuel production process and effectively utilize the recovered uranium after reprocessing while using fuel having a uranium enrichment exceeding 5 wt% for the purpose of a high burnup.

Problems, configurations, and effects other than the above will become apparent from description of embodiments below.

Brief Description of Drawings

[FIG. 1] FIG. 1 is a graph showing changes in a uranium 235 enrichment and a neutron multiplication factor.
[FIG. 2] FIG. 2 is a graph showing lower limits of the uranium 235 enrichment and a content of uranium 236.
[FIG. 3] FIG. 3 is a graph showing upper limits of the uranium 235 enrichment and the content of uranium 236.
[FIG. 4] FIG. 4 is a graph showing a region between the lower limits and the upper limits of the uranium 235 enrichment and the content of uranium 236.
[FIG. 5] FIG. 5 is an overall schematic configuration diagram of a fuel assembly according to an embodiment of the invention.
[FIG. 6] FIG. 6 is a cross-sectional view (horizontal cross-sectional view) of the fuel assembly viewed from a line A-A' as shown in FIG. 5, and is a diagram showing an enrichment of each fuel rod and addition of a burnable poison.
[FIG. 7] FIG. 7 is a schematic configuration diagram of an advanced boiling water reactor equipped with a reactor core loaded with the fuel assembly shown in FIG. 5 and FIG. 6.
[FIG. 8] FIG. 8 is a flowchart showing an outline of a process of producing a fuel assembly according to an embodiment of the invention.

Description of Embodiments

Hereinafter, embodiments of the invention will be described with reference to the drawings. In the drawings, the same components are denoted by the same reference numerals, and a detailed description of the repeated parts will be omitted.

The present inventors have conducted various studies and found a configuration in which a uranium 235 enrichment is increased while utilizing recovered uranium. First, an outline of the study result and newly found fuel will be described below.

As disclosed in PTL 3, in current "uranium processing facility safety examination guideline", a uranium 235 enrichment of 5 wt% is set as an upper limit in fuel production. Uranium 236 contained in the recovered uranium is an absorber material, but does not have a large absorption cross section like a burnable poison, and has an absorption characteristic similar to that of uranium 238. In order to be capable of producing fuel having a uranium 235 enrichment exceeding 5 wt%, uranium 236 may be added such that a neutron multiplication factor of the fuel is smaller than a neutron multiplication factor of fuel having a uranium 235 enrichment of 5 wt% and not containing uranium 236. On the other hand, when uranium 236 is excessively added, even when the uranium 235 enrichment is increased, a high burnup cannot be achieved.

That is, a lower limit of a content of uranium 236 is specified from the viewpoint of fuel production, and an upper limit of the content of uranium 236 is specified in order to obtain an economical effect when the uranium 235 enrichment is increased.

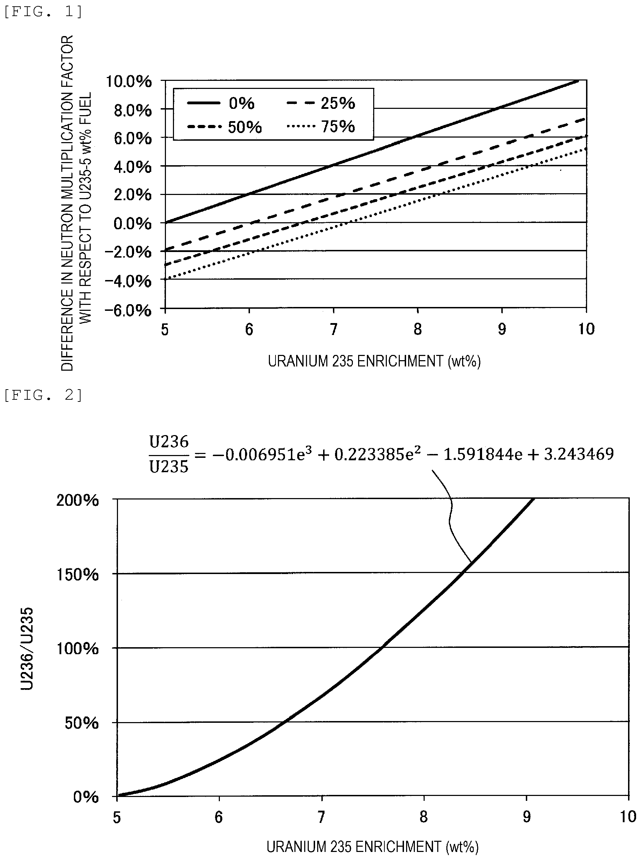

FIG. 1 shows the increase amount of the neutron multiplication factor with respect to the uranium 235 enrichment for each content of uranium 236 with respect to uranium 235. The increase amount of the neutron multiplication factor is based on the fuel having a uranium 235 enrichment of 5 wt% and not containing uranium 236. It indicates that fuel having a uranium enrichment exceeding 5 wt% below a base (0.0% dk) can be produced by a current production facility. FIG. 2 shows a relationship between the uranium enrichment below the base and the content of uranium 236 with respect to uranium 235. Thus, a relationship between the uranium 235 enrichment that always satisfies the base and the content of uranium 236 with respect to uranium 235 is expressed by expression (1).

[Math. 5]

$$\frac{U236}{U235} \geq -0.006951e^3 + 0.223385e^2 - 1.591844e + 3.243469$$

Here, e is the uranium 235 enrichment, that is, a ratio of a weight of uranium 235 to a weight of all uranium. (e = weight of uranium 235 / weight of all uranium)

If the neutron multiplication factor of the fuel containing uranium 236 during a discharge burnup is higher than the neutron multiplication factor during the discharge burnup when the fuel having a uranium enrichment of 5 wt% and not containing uranium 236 is irradiated, it can be said that it is useful from the viewpoint of economy. Therefore, the increase amount of the neutron multiplication factor during the discharge burnup when the fuel having a uranium enrichment of 5 wt% and not containing uranium 236 is irradiated is shown in FIG. 2 according to the content of uranium 236. The increase amount of the neutron multiplication factor is based on the fuel having a uranium 235 enrichment of 5 wt% and not containing uranium 236. Fuel above the base (0.0% dk) indicates that there is an economical advantage of producing fuel having a uranium 235 enrichment exceeding 5 wt%. As a result, a relationship between the uranium 235 enrichment having economical advantages and the content of uranium 236 with respect to uranium 235 is expressed by expression (2).

[Math. 6]

$$\frac{U236}{U235} \leq 0.3975e^2 - 3.4946e + 7.5355$$

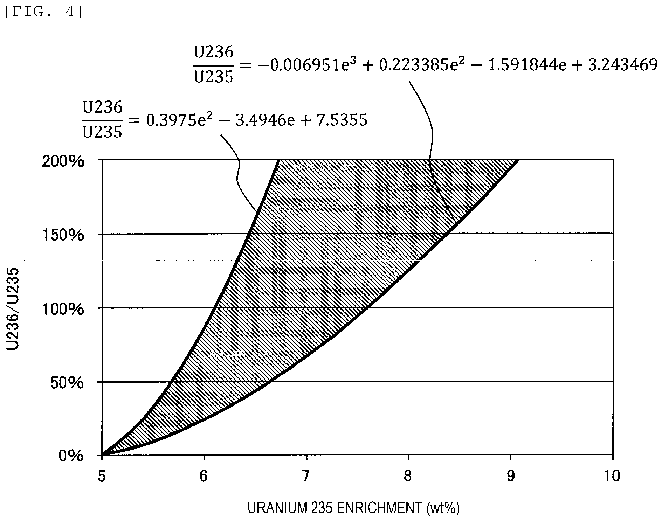

As a result, as shown in FIG. 4, in a range (hatched region in FIG. 4) satisfying the expression (1) and the expression (2), the fuel having a uranium 235 enrichment exceeding 5 wt% can be produced, which is also economically advantageous.

Embodiments of the invention reflecting the above study results will be described below.

[First Embodiment]

The recovered uranium obtained by reprocessing spent fuel in a reprocessing facility contains uranium 236, but the composition thereof depends on the burnup of the spent fuel and a loaded plant. In order to effectively utilize the recovered uranium, uranium 235 needs to be re-concentrated, and at this time, the content of uranium 236 with respect to uranium 235 is hardly changed since it is difficult to only separate uranium 236.

That is, the amount of uranium 236 with respect to uranium 235 is basically the amount given during the reprocessing. In order to produce the fuel having a uranium 235 enrichment exceeding 5 wt%, a uranium 235 enrichment within a range defined by the expression (1) and the expression (2) may be obtained based on the amount of uranium 236 with respect to uranium 235.

For example, when the content of uranium 236 with respect to uranium 235 is 50%, if the uranium 235 enrichment is 5.7 wt% to 6.7 wt%, the fuel having a uranium 235 enrichment exceeding 5 wt% can be produced with safety even in a fuel production facility in the related art, and is more economical than the fuel having a uranium 235 enrichment of 5 wt% and not containing uranium 236.

[Second Embodiment]

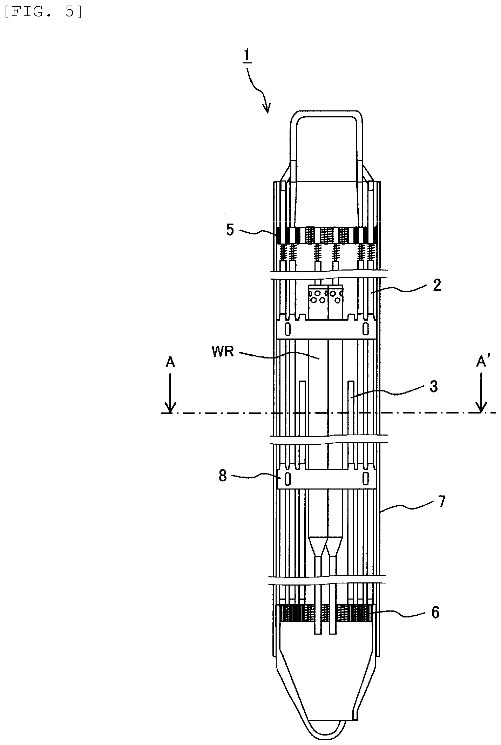

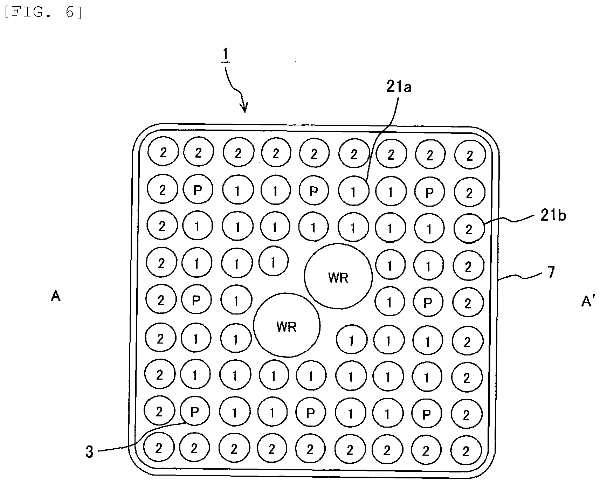

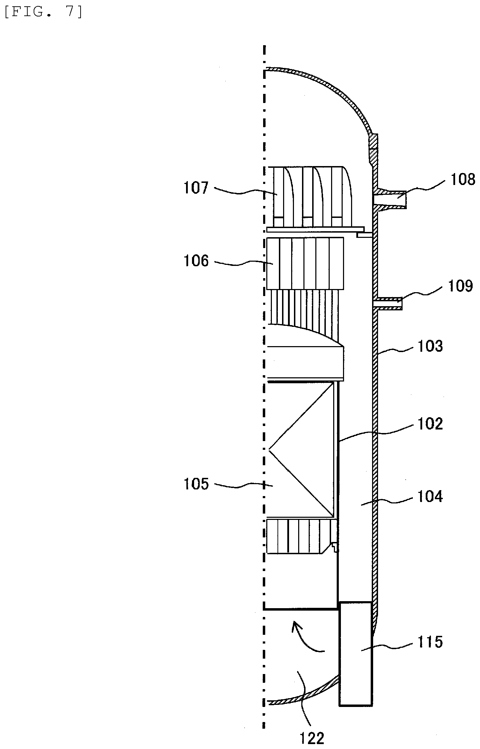

A fuel assembly according to a second embodiment will be described with reference to FIG. 5 to FIG. 7. FIG. 5 is an overall schematic configuration diagram of a fuel assembly according to an embodiment of the invention. FIG. 6 is a cross-sectional view (horizontal cross-sectional view) of the fuel assembly viewed from a line A-A' as shown in FIG. 5. Further, FIG. 7 is a schematic configuration diagram of an advanced boiling water reactor equipped with a reactor core loaded with the fuel assembly shown in FIG. 5 and FIG. 6.

As shown in FIG. 7, an advanced boiling water reactor (ABWR) is provided with a cylindrical reactor core shroud 102 in a reactor pressure vessel (reactor vessel) 103, and a reactor core 105 having a plurality of fuel assemblies (not shown) loaded therein is disposed in the reactor core shroud 102. Further, a steam-water separator 106 extending above the reactor core 105 and a steam dryer 107 disposed above the steam-water separator 106 are provided in the reactor pressure vessel (hereinafter referred to as RPV) 103. An annular downcomer 104 is formed between the RPV 103 and the reactor core shroud 102. An internal pump 115 is disposed in the downcomer 104.

Cooling water discharged from the internal pump 115 is supplied to the reactor core 105 via a lower plenum 122. The cooling water is heated when passing through the reactor core 105 to form a gas-liquid two-phase flow containing water and steam. The steam-water separator 106 separates the gas-liquid two-phase flow into steam and water. The separated steam is further dehumidified by the steam dryer 107 and guided to a main steam pipe 108. The dehumidified steam is guided to a steam turbine (not shown) to rotate the steam turbine. A generator coupled to the steam turbine rotates to generate electric power. Steam discharged from the steam turbine is condensed by a condenser (not shown) and becomes water. The condensed water is supplied as cooling water into the RPV 103 via a water supply pipe 109. The water separated by the steam-water separator 106 and the steam dryer 107 falls down and reaches the downcomer 104 as cooling water.

Although not shown in FIG 7, the lower plenum 122 of the RPV 103 includes a control rod guide pipe that allows a plurality of control rods (CRs) having a cruciform cross-section to be inserted into the reactor core 105 to control a nuclear reaction of the fuel assembly, a control rod drive mechanism in a control rod drive mechanism housing installed below a bottom of the RPV 103 is provided, and the control rods are coupled to the control rod drive mechanism.

FIG. 5 shows an overall schematic configuration diagram of a fuel assembly 1. The fuel assembly 1 of the present embodiment includes a plurality of fuel rods 2, a partial length fuel rod 3, an upper tie plate 5, a lower tie plate 6, a plurality of fuel spacers 8, a plurality of water rods WRs, and a channel box 7. The fuel rods 2 (so-called full length fuel rod) and the partial length fuel rod 3 are filled with a plurality of fuel pellets (not shown) sealed in a cladding pipe (not shown).

The lower tie plate 6 supports lower end portions of the fuel rods 2 and the partial length fuel rod 3, and the upper tie plate 5 holds upper end portions of the fuel rods 2. A lower end portion of the water rod WR is supported by the lower tie plate 6, and an upper end portion of the water rod WR is held by the upper tie plate 5. The plurality of fuel spacers 8 are disposed at predetermined intervals in an axial direction of the fuel assembly 1, and hold the fuel rods 2 and the water rod WR so as to form a flow path through which the cooling water flows between the fuel rods 2 (including the partial length fuel rod 3) and between the fuel rod 2 and the water rod WR.

The channel box 7 which is a square tube having a square cross-section is attached to the upper tie plate 5 and extends downward. The fuel rods 2 bundled by the fuel spacers 8 are disposed in the channel box 7. A handle is fastened to the upper end portion of the upper tie plate 5, and when the handle is lifted, the overall fuel assembly 1 can be pulled up.

FIG. 6 is a cross-sectional view (horizontal cross-sectional view) of the fuel assembly 1 viewed from a line A-A' as shown in FIG. 5. As shown in FIG. 6, in a horizontal cross-section of the fuel assembly 1, fuel rods 21a and 21b, the partial length fuel rod 3, and the water rod WR are disposed in a square grid of 9 rows and 9 columns formed in the channel box 7. Two water rods WR having a cross-sectional area that occupies a region where four fuel rods 2 can be disposed are disposed at a center portion of the horizontal cross-section (cross-section) of the fuel assembly 1. The water rod WR is a large diameter water rod having a cross-sectional area that occupies a region where at least two fuel rods 2 can be disposed. In the present embodiment, a length of a region where a fuel pellet containing fissile uranium is loaded in the fuel rod 2, that is, an effective length of the fuel of the present embodiment is 3.7 m.

When the fuel assembly 1 is loaded in the reactor core 105 of the advanced boiling water reactor (ABWR), one corner is disposed to face the control rod CR having a cruciform cross-section inserted into the reactor core 105. The channel box 7 is attached to the upper tie plate 5 via a channel fastener (not shown). The channel fastener has a function of holding a gap having a necessary width between the fuel assemblies 1 such that the control rod CR can be inserted between the fuel assemblies 1 when the fuel assembly 1 is loaded in the reactor core 105. Therefore, the channel fastener is attached to the upper tie plate 6 so as to be located at the corner facing the control rod CR.

In other words, the corner portion facing the control rod CR of the fuel assembly 1 is a corner portion to which the channel fastener is attached. Each fuel pellet filled in each fuel rod 2 is produced by using uranium dioxide ($UO_2$), which is the nuclear fuel material exemplified in the first embodiment. The fuel rod 21a contains uranium 236, the uranium 235 enrichment is 6 wt%, and the amount of uranium 236 with respect to uranium 235 is 50%. At this time, since the uranium 235 enrichment satisfying the expression (1) and the expression (2) is 5.7 wt% to 6.7 wt%, the fuel of the fuel rod 21a is within the range of the invention. The uranium 235 enrichment of the fuel rod 21b and the partial length fuel rod 3 is 5 wt%. Therefore, an average uranium 235 enrichment in the cross-section is 5.5 wt%.

As shown in FIG. 2, a relationship between the uranium 235 enrichment and the amount of uranium 236 with respect to uranium 235 increases with the increasing of uranium 235 enrichment, but is not linear and is a square or cube curve. This indicates that an absorption effect of uranium 236 decreases at an accelerated rate as the uranium 235 enrichment increases and the neutron spectrum hardens.

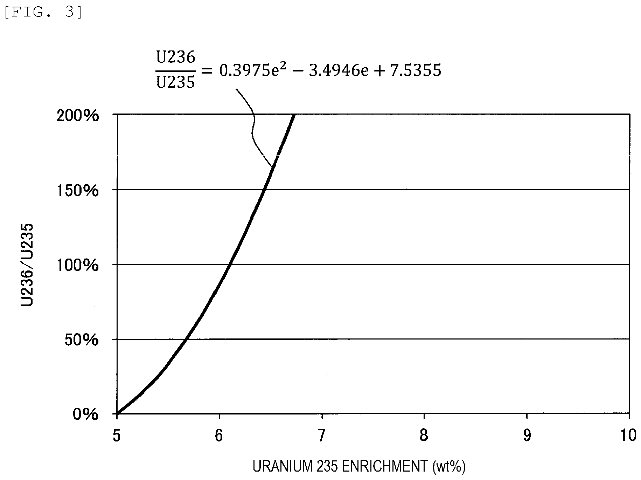

Since a curve shown in FIG. 3 has a steeper slope than a curve shown in FIG. 2, it indicates that the economic efficiency is improved and the absorption effect of uranium 236 decreases as the uranium 235 enrichment increases. Therefore, the hardener the neutron spectrum is, the more the economic efficiency is improved. Therefore, the economic efficiency is improved by the fuel arrangement shown in FIG. 6.

[Third Embodiment]

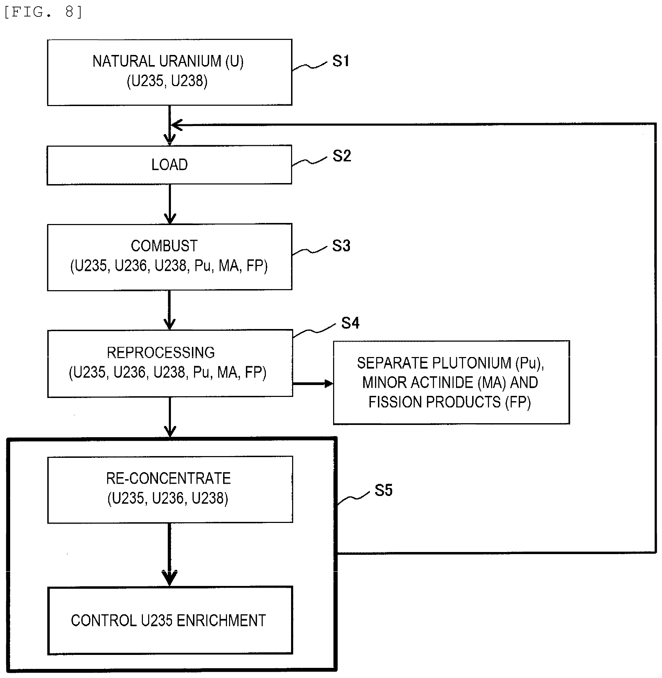

A method for producing a fuel assembly according to a third embodiment will be described with reference to FIG. 8. FIG. 8 is a flowchart showing an outline of a process of producing the fuel assembly described in each of the embodiments.

First, in a fuel processing plant, natural uranium (U) as a primary fuel is produced through steps such as smelting, conversion, and concentration by using uranium ore as a raw material. Natural uranium (U) used as fuel in a common nuclear plant includes about 0.7 wt% of uranium 235, which is likely to fission, and about 99.3 wt% of uranium 238, which is less likely to fission. (Step S1)

Natural uranium (U) is processed as the fuel assembly as shown in FIG. 5 and FIG. 6 and loaded as fuel into a nuclear plant such as a nuclear power station. (Step S2)

The fuel assembly loaded into the reactor core of the nuclear plant undergoes a fission reaction (combustion) in the reactor core, and steam is generated by the generated heat. A turbine is rotated by the generated steam to generate power. Uranium 236, plutonium (Pu), minor actinides (MA: neptunium (Np), americium (Am), curium (Cm), and the like), and other fission products (FP) are produced by the nuclear fission reaction (combustion). (Step S3)

Spent fuel after being utilized as the fuel in the nuclear plant is separated into uranium and other materials in a reprocessing plant, and uranium is recovered for use as fuel again. The uranium recovered in the reprocessing plant is called recovered uranium and contains uranium 235, uranium 236, and uranium 238. (Step S4)

The separated plutonium (Pu) is processed as MOX fuel (Mixed Oxide: uranium and plutonium mixed oxide) in an MOX fuel plant together with the recovered uranium and used as fuel in the nuclear plant. The minor actinides (MA) and the fission products (FP) are processed as high-level radioactive wastes.

The recovered uranium, which is a secondary fuel recovered in the reprocessing plant, is used as fuel of the nuclear plant again together with natural uranium (U) produced in step S1 through steps such as conversion and re-concentration in the fuel processing plant. (Step S5)

In step S5, the uranium 235 enrichment is controlled to be within a range satisfying the expression (1) and the expression (2) (that is, the hatched region in FIG. 4).

As described above, even when the uranium 235 enrichment exceeds 5 wt%, the recovered uranium after reprocessing can be effectively utilized while ensuring safety against limitation on the critical management relating to fuel production.

As shown in FIG. 6, for example, when the fuel rods are arranged in a square grid pattern of 9 rows and 9 columns, the concentrated uranium produced by a related method may be disposed at a corner portion (peripheral portion) in the channel box 7 and the recovered uranium described in each embodiment may be disposed near a center portion. In this case, an output distribution of the fuel assembly in a radial direction can be flattened.

In addition, when the fuel assembly is configured as shown in FIG. 5, the recovered uranium as described in each embodiment, that is, the recovered uranium having a content of uranium 236 with respect to uranium 235 in the range between the expression (1) and the expression (2) is used on an upper side of the fuel rod, and the concentrated uranium produced by the related method may be used on a lower side of the fuel rod. Uranium 236 can be effectively utilized on an upper side where the neutron spectrum is hardened and the absorption is small.

The invention is not limited to the above embodiments, and includes various modifications. For example, the above-mentioned embodiments are described in detail for easy understanding of the invention, and the invention is not necessarily limited to those including all the configurations described above. A part of the configuration of one embodiment can be replaced with the configuration of another embodiment, and the configuration of another embodiment can be added to the configuration of one embodiment. A part of the configuration of each embodiment may be subjected to addition, deletion and replacement of another configuration.

Reference Sign List

1... fuel assembly, 2, 21a, 21b... fuel rod, 3... partial length fuel rod, 5... upper tie plate, 6... lower tie plate, 7... channel box, 8... spacer, WR... water rod, 102... reactor core shroud, 103... reactor pressure vessel (RPV), 104... downcomer, 105... reactor core, 106... steam-water separator, 107... steam dryer, 108... main steam pipe, 109... water supply pipe, 115... internal pump, 122... lower plenum.

**Claims**

1.  A fuel assembly (1) comprising:

    a plurality of fuel rods (2) containing uranium, wherein
    at least one fuel rod among the plurality of fuel rods (2) has a content of uranium 236 with respect to uranium 235 in a range defined by expression (1):

    [Math. 7]

    $$\frac{U236}{U235} \geq -0.006951e^3 + 0.223385e^2 - 1.591844e + 3.243469$$

    and expression (2):

    [Math. 8]

    $$\frac{U236}{U235} \leq 0.3975e^2 - 3.4946e + 7.5355$$

    where e is a uranium 235 enrichment, **characterized in that**
    the uranium 235 enrichment e is 5 wt% or more, and
    in the fuel assembly (1), the plurality of fuel rods (2) are arranged in a square grid pattern, and
    a fuel rod containing uranium 236 having a content of uranium 236 with respect to uranium 235 in the range defined by the expression (1) and the expression (2) is disposed near a center of the fuel assembly (1) .

2.  The fuel assembly (1) according to claim 1, wherein
    the uranium 235 enrichment e is 5 wt% or more and 7 wt% or less.

3.  The fuel assembly (1) according to any one of claims 1 to 2, wherein
    on an upper side of the plurality of fuel rods (2), the content of uranium 236 with respect to uranium 235 is in the range defined by expression (1) and the expression (2).

4.  A method for producing a fuel assembly (1) comprising:

    (a) a step of separating and recovering uranium containing uranium 235, uranium 236, and uranium 238 from spent fuel; and
    (b) a step of re-concentrating the recovered uranium recovered in step (a), wherein
    in step (b), uranium 238 is removed such that a content of uranium 236 with respect to uranium 235 is in a range defined by expression (1):

    [Math. 9]

    $$\frac{U236}{U235} \geq -0.006951e^3 + 0.223385e^2 - 1.591844e + 3.243469$$

    and expression (2):

[Math. 10]

$$\frac{U236}{U235} \leq 0.3975e^2 - 3.4946e + 7.5355$$

where e is a uranium 235 enrichment, **characterized in that**
in step b(b), uranium 238 is removed such that the uranium 235 enrichment e is 5 wt% or more, and
in the fuel assembly (1), the plurality of fuel rods (2) are arranged in a square grid pattern, and
a fuel rod containing uranium 236 having a content of uranium 236 with respect to uranium 235 in the range
defined by the expression (1) and the expression (2) is disposed near a center of the fuel assembly (1).

5. The method for producing a fuel assembly (1) according to claim 4, wherein
in step (b), uranium 238 is removed such that the uranium 235 enrichment e is 5 wt% or more and 7 wt% or less.

6. The method for producing a fuel assembly (1) according to any one of claims 4 to 5, wherein
on an upper side of the plurality of fuel rods (2), the content of uranium 236 with respect to uranium 235 is in the
range defined by expression (1) and the expression (2).

**Patentansprüche**

1. Brennelement (1), das Folgendes umfasst:

mehrere Brennstäbe (2), die Uran enthalten, wobei
mindestens ein Brennstab unter den mehreren Brennstäben (2) einen Gehalt von Uran 236 in Bezug auf Uran
235 in einem Bereich aufweist, der durch Ausdruck (1):

[Math. 7]

$$\frac{U236}{U235} \geq -0{,}006951e^3 + 0{,}223385e^2 - 1{,}591844e + 3{,}243469$$

und Ausdruck (2):

[Math. 8]

$$\frac{U236}{U235} \leq 0{,}3975e^2 - 3{,}4946e + 7{,}5355$$

definiert ist, wobei e eine Uran-235-Anreicherung ist, **dadurch gekennzeichnet, dass**
die Uran-235-Anreicherung e 5 Gew.-% oder mehr beträgt,
die mehreren Brennstäbe (2) im Brennelement (1) in einem Quadratgittermuster angeordnet sind und
ein Brennstab, der Uran 236 enthält und der einen Gehalt von Uran 236 in Bezug auf Uran 235 in dem Bereich,
der durch den Ausdruck (1) und den Ausdruck (2) definiert ist, aufweist, in der Nähe eines Zentrums des
Brennelements (1) angeordnet ist.

2. Brennelement (1) nach Anspruch 1, wobei
die Uran-235-Anreicherung e im Bereich von 5 Gew.-% bis 7 Gew.-% liegt.

3. Brennelement (1) nach einem der Ansprüche 1 bis 2, wobei
an einer Oberseite der mehreren Brennstäbe (2) der Gehalt von Uran 236 in Bezug auf Uran 235 in dem Bereich
liegt, der durch Ausdruck (1) und den Ausdruck (2) definiert ist.

4. Verfahren zum Herstellen eines Brennelements (1), das Folgendes umfasst:

(a) einen Schritt des Trennens und des Rückgewinnens von Uran, das Uran 235, Uran 236 und Uran 238 aus abgebranntem Brennstoff enthält; und

(b) einen Schritt des erneuten Anreicherns des zurückgewonnenen Urans, das in Schritt (a) zurückgewonnen wurde, wobei

in Schritt (b) Uran 238 derart entfernt wird, dass ein Gehalt von Uran 236 in Bezug auf Uran 235 in einem Bereich liegt, der durch Ausdruck (1):

[Math. 9]

$$\frac{U236}{U235} \geq -0{,}006951e^3 + 0{,}223385e^2 - 1{,}591844e + 3{,}243469$$

und Ausdruck (2):

[Math. 10]

$$\frac{U236}{U235} \leq 0{,}3975e^2 - 3{,}4946e + 7{,}5355$$

definiert ist, wobei e eine Uran-235-Anreicherung ist, **dadurch gekennzeichnet, dass**

in Schritt (b) Uran 238 derart entfernt wird, dass die Uran-235-Anreicherung e 5 Gew.-% oder mehr beträgt, die mehreren Brennstäbe (2) im Brennelement (1) in einem Quadratgittermuster angeordnet sind und ein Brennstab, der Uran 236 enthält, das einen Gehalt von Uran 236 in Bezug auf Uran 235 in dem Bereich, der durch den Ausdruck (1) und den Ausdruck (2) definiert ist, aufweist, in der Nähe eines Zentrums des Brennelements (1) angeordnet ist.

5. Verfahren zum Herstellen eines Brennelements (1) nach Anspruch 4, wobei
   in Schritt (b) Uran 238 derart entfernt ist, dass die Uran-235-Anreicherung e im Bereich von 5 Gew.-% bis 7 Gew.-% liegt.

6. Verfahren zum Herstellen eines Brennelements (1) nach einem der Ansprüche 4 bis 5, wobei
   an einer Oberseite der mehreren Brennstäbe (2) der Gehalt von Uran 236 in Bezug auf Uran 235 in dem Bereich liegt, der durch Ausdruck (1) und den Ausdruck (2) definiert ist.

**Revendications**

1. Assemblage de combustible (1) comprenant :

   une pluralité de barres de combustible (2) contenant de l'uranium, dans lequel
   au moins une barre de combustible parmi la pluralité de barres de combustible (2) a une teneur d'uranium 236 par rapport à celle d'uranium 235 dans une plage définie par l'expression (1) :

   [math. 7]

$$\frac{U236}{U235} \geq -0.006951e^3 + 0.223385e^2 - 1.591844e + 3.243469$$

   et l'expression (2) :

   [math. 8]

$$\frac{U236}{U235} \leq 0.3975e^2 - 3.4946e + 7.5355$$

   dans lesquelles e est un enrichissement d'uranium 235,

**caractérisé en ce que**

l'enrichissement e d'uranium 235 est de 5 % en poids ou plus, et

dans l'assemblage de combustible (1), la pluralité de barres de combustible (2) sont agencées dans un motif de grille carrée, et

une barre de combustible contenant de l'uranium 236 ayant une teneur d'uranium 236 par rapport à celle d'uranium 235 dans la plage définie par l'expression (1) et l'expression (2) est disposée près d'un centre de l'assemblage de combustible (1).

2. Assemblage de combustible (1) selon la revendication 1, dans lequel l'enrichissement e d'uranium 235 est de 5 % en poids ou plus et de 7 % en poids ou moins.

3. Assemblage de combustible (1) selon l'une quelconque des revendications 1 à 2, dans lequel

sur un côté supérieur de la pluralité de barres de combustible (2), la teneur d'uranium 236 par rapport à celle d'uranium 235 est dans la plage définie par l'expression (1) et l'expression (2).

4. Procédé pour produire un assemblage de combustible (1) comprenant :

(a) une étape de séparation et de récupération d'uranium contenant de l'uranium 235, de l'uranium 236, et de l'uranium 238 provenant d'un combustible épuisé ; et

(b) une étape de re-concentration de l'uranium récupéré qui a été récupéré dans l'étape (a), dans lequel

dans l'étape (b), de l'uranium 238 est enlevé de sorte qu'une teneur d'uranium 236 par rapport à celle d'uranium 235 est dans une plage définie par l'expression (1) :

[math. 9]

$$\frac{U236}{U235} \geq -0.006951e^3 + 0.223385e^2 - 1.591844e + 3.243469$$

et l'expression (2) :

[math. 10]

$$\frac{U236}{U235} \leq 0.3975e^2 - 3.4946e + 7.5355$$

dans lesquelles e est un enrichissement d'uranium 235,

**caractérisé en ce que**

dans l'étape (b), de l'uranium 238 est enlevé de sorte que l'enrichissement e d'uranium 235 est de 5 % en poids ou plus, et

dans l'assemblage de combustible (1), la pluralité de barres de combustible (2) sont agencées dans un motif de grille carrée, et

une barre de combustible contenant de l'uranium 236 ayant une teneur d'uranium 236 par rapport à celle d'uranium 235 dans la plage définie par l'expression (1) et l'expression (2) est disposée près d'un centre de l'assemblage de combustible (1).

5. Procédé pour produire un assemblage de combustible (1) selon la revendication 4, dans lequel

dans l'étape (b), de l'uranium 238 est enlevé de sorte que l'enrichissement e d'uranium 235 est de 5 % en poids ou plus et de 7 % en poids ou moins.

6. Procédé pour produire un assemblage de combustible (1) selon l'une quelconque des revendications 4 à 5, dans lequel

sur un côté supérieur de la pluralité de barres de combustible (2), la teneur d'uranium 236 par rapport à celle d'uranium 235 est dans la plage définie par l'expression (1) et l'expression (2).

[FIG. 1]

[FIG. 2]

$$\frac{U236}{U235} = -0.006951e^3 + 0.223385e^2 - 1.591844e + 3.243469$$

[FIG. 3]

$$\frac{U236}{U235} = 0.3975e^2 - 3.4946e + 7.5355$$

[FIG. 4]

$$\frac{U236}{U235} = -0.006951e^3 + 0.223385e^2 - 1.591844e + 3.243469$$

$$\frac{U236}{U235} = 0.3975e^2 - 3.4946e + 7.5355$$

[FIG. 5]

[FIG. 6]

[FIG. 7]

[FIG. 8]

**EP 3 608 919 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5986802 B
- JP 11174179 A
- JP 4077303 B
- US 4018697 A
- EP 2280400 A1